# EUROPEAN PATENT SPECIFICATION

(11) **EP 2 908 038 B1**
(45) Date of publication and mention of the grant of the patent: **01.04.2020**
(21) Application number: 14155073.1
(22) Date of filing: 13.02.2014
(51) Int. Cl.: H02G 3/30, B29C 45/14, B29C 45/04, B29C 45/07, G05D 1/02

(54) **A method and a robotic system for the attachment of an arrangement**
Verfahren und Robotersystem zur Befestigung einer Anordnung
Procédé et système robotique pour la fixation d'un dispositif

(43) Date of publication of application: 19.08.2015
(73) Proprietor: Airbus Operations GmbH, 21129 Hamburg (DE)
(72) Inventor: Malke, Christian, 21129 Hamburg (DE); Borchert, Tom, 21129 Hamburg (DE)
(74) Representative: LKGLOBAL Lorenz & Kopf PartG mbB Patentanwälte

(56) References cited:
- DE-A1-102005 014 802
- DE-A1-102005 014 802
- US-A1- 2004 101 586

## Description

The invention concerns a method for the attachment of an arrangement for the attachment of a system to a structure at least partially, and a robotic system for executing such an attachment of an arrangement for the attachment of a system to a structure at least partially.

Components in aircraft such as lines, in particular power signal cables, data cables or respective cable harnesses and air conditioning pipes, are often directly fixed to sections of a primary structure of the aircraft such as stringers, frames or cross-beams by means of cable binders. As shown in DE 10 2006 053 996 A1 and also in DE 10 2009 022 175 A1, the lines can, however, be indirectly attached to the structural sections in combination with attachment arrangements. The attachment arrangements themselves are either fixed to the structure by rivets extending through respective rivet holes in the structure, by a snap and click connector or attachment arrangements are bonded to the structure by an adhesive. The installation of the attachment arrangements is done manually.

DE 10 2005 014 802 A1 describes a device for manufacturing a body component for a vehicle. The body component is made of a combined synthetic and metallic material. An injection molding unit is attached to a roboter arm such that the injection molding unit can be positioned with respect to the body component. By means of the injection molding unit a synthetic component is applied onto the body component.

The object of the present invention is to create a method for the attachment of an arrangement for the attachment of a system to a structure at least partially, in particular lines to a primary structure of an aircraft, that enables a fast installation of the system. Furthermore, it is the object of the invention to create a robotic system for the attachment of an arrangement for the attachment of a system to a structure at least partially, in particular lines to a primary structure of an aircraft, that enables a fast installation of the system.

This object is achieved by means of a method with the features of claim 1 and by means of a robotic system with the features of claim 4.

According to the invention, in a method for the attachment of an arrangement for the attachment of a system to a structure at least partially, wherein a first element of the arrangement is bonded to the structure, the first element is created by injecting at least one material into a mould carried by a robotic system to a target position of the arrangement on the structure which is closed at one side by pressing it against the structure, and after the first element is cured a second element of the arrangement is coupled indirectly to the first element, whereas an insert for coupling the second element to the first element is positioned at least partially in the mould during the material injection.

In other words, according to the invention, a mould guided by a robotic system is positioned in the target position on a structure, wherein an opening of the mould is closed by direct contact with the structure. Then, at least one material is injected in the mould, wherein an insert is positioned in the mould and the at least one material contacts the surface in the area of the mould opening. After the at least one material in the mould is cured, the cured material forming a first element, a kind of substructure of the arrangement, is released by opening the mould. Then, a second element of the arrangement is coupled indirectly to the first element. Preferably, the robotic system is used for positioning, moulding respectively casting and bonding the respective first element, while the coupling of the respective second element of the arrangement is done manually. By use of the method according to the invention, the process time can be reduced to more than 30% of current process time. Regarding the whole lead time, including the curing time, a saving potential of almost 98% is possible. In order to reduce curing time, preferably a material composition comprising a resin and a fast hardener are used for creating the first element. Furthermore ergonomic conditions for the operators are improved and thus lead to better working conditions. Today, pins are delivered with an assembly adapter (retainer). The method according to the invention does not need additional assembly devices, which leads to a reduction of produced waste compared to the current baseline process. The step of preparing an adapter and removal is eliminated using the invented method. Further on, tight tolerances for single parts and joined components can be realised. By use of the invented method a new bracket design and a changed bracket integration philosophy could be implemented. That means: integration of brackets on aircraft level instead of component level, to minimize tolerance issues and workload for the rework / relocation of the brackets. After joining of large components, such as shells or floor grid, the position of the brackets to be installed can be located and assembled on the spot within the fuselage. In particular, the invention has the following main advantages. Improved ergonomic condition of operators, reduced curing time, reduced assembly time, independent part design, performing tasks within areas of limited access, compensation of tolerance issues due to the use of light positioning of parts, reduction of concessions on shop floor level due to rework, elimination of waste, no additional assembly device is necessary, elimination of riveted brackets possible, flexible response on late design changes for brackets, pins etc., use of only one material for bracket and adhesive, and reduction of specification efforts.

In a preferred embodiment, the robotic system orientates itself relative to the structure by comparison of live measured position data and stored structure design data. The structure design data can be stored directly on the robotic system or on a storage unit beside the robotic system and then transferred railless to the robotic system. Using, for example, a CATIA design model of the structure and live data for positioning, the robotic system could be used for assembly operations within narrow areas even together with human operators. Thus, the robotic system is able to work autonomously and perform monotonic tasks requiring a constant high quality even under normal ergonomic conditions. In order to facilitate the orientation, the robotic system can compare CAD data with actual reference points on the structure. By such a comparison, the target position of the respective arrangement can be found within the engineering given tolerances.

In order to attach the second element of the arrangement to the respective first element indirectly, an insert for coupling the second element to the first element is positioned at least partially in the mould during the material injection. Such an insert can be formed individually, this enabling a flexible combination of first and second elements as the connection between them is done via the insert. This means, using the insert, the design of the second element is not influenced by the design of the first element.

In order to enhance adhesive forces between the structure and the first element, the respective structure area can be surface treated before bonding the first element to the structure, in particular by the robotic system.

According to the invention, a robotic system for the attachment of an arrangement for the attachment of a system to a structure at least partially comprises a mould defining a cavity for creating a first element of the arrangement and having a contact surface for being pressed against the structure, wherein the mould comprises an opening in its contact surface, an injection unit for providing and injecting at least one material into the mould, and a control unit for controlling at least a position of the robotic system relative to the structure. Such a robotic system enables the execution of the method according to the invention. As by using the robotic system a substructure of an attachment can be casted directly onto the structure during its formation, the process time can be reduced significantly of current process time. Regarding the whole lead time, including the curing time, a saving potential of almost 98% is possible.

According to the invention, the mould robotic system comprises a manipulator for positioning the mould on the structure and the railless automated vehicle for carrying the manipulator. Such a robotic system is able to move on a ground without any restriction regarding its movement directions. By means of the manipulator, at least almost every position on the structure can be reached.

In order to facilitate the releasing process of the first element, the mould comprises at least two parts defining the cavity which are moveable relatively to each other.

In one embodiment, the control unit comprises a scanner for scanning the environment of the robotic system. By this means, a reliable positioning and re-positioning of the robotic system is ensured. In one embodiment, the scanner comprises a laser tracking system.

In order to inject a homogenous material composition in the mould, the injection unit can comprise a mixing schema for mixing up the different materials.

By means of a holding device provided by the robotic system an insert for coupling the second element to the first element of the attachment can be easily positioned at least partially in the mould during material injection.

In order to prepare the respective structure section, a treatment unit can be provided by the robotic system for surface treatment of the structure in the target position of the arrangement.

Other advantageous examples of the embodiment of the invention are the subject of further subsidiary claims.

In what follows, preferred examples of embodiments of the invention are illustrated in more detail with the aid of the schematic representations. Here:
- Figure 1: shows a perspective view of an example of an attachment arrangement created by a method according to the invention,
- Figure 2: shows a direct coupling between a first element and a second element of an attachment arrangement, which does not form part of the invention,
- Figure 3: shows a indirect coupling between a first element and a second element of an attachment arrangement,
- Figure 4: shows a view of a robotic system according to the invention,
- Figure 5: shows two parts of a mould according to the invention, and

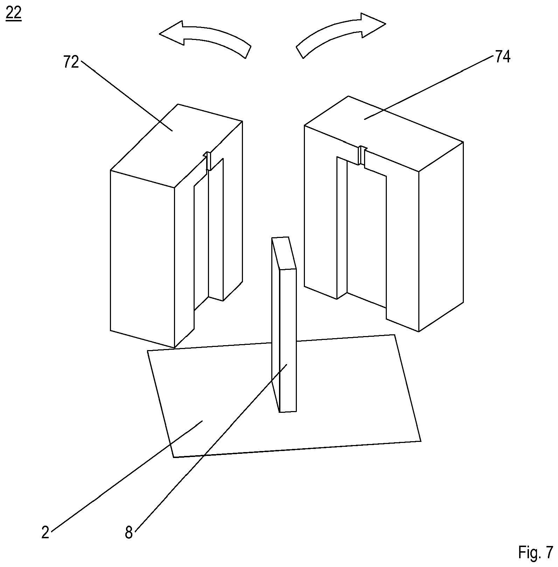

- Figures 6 and 7: show steps of a method according to the invention.

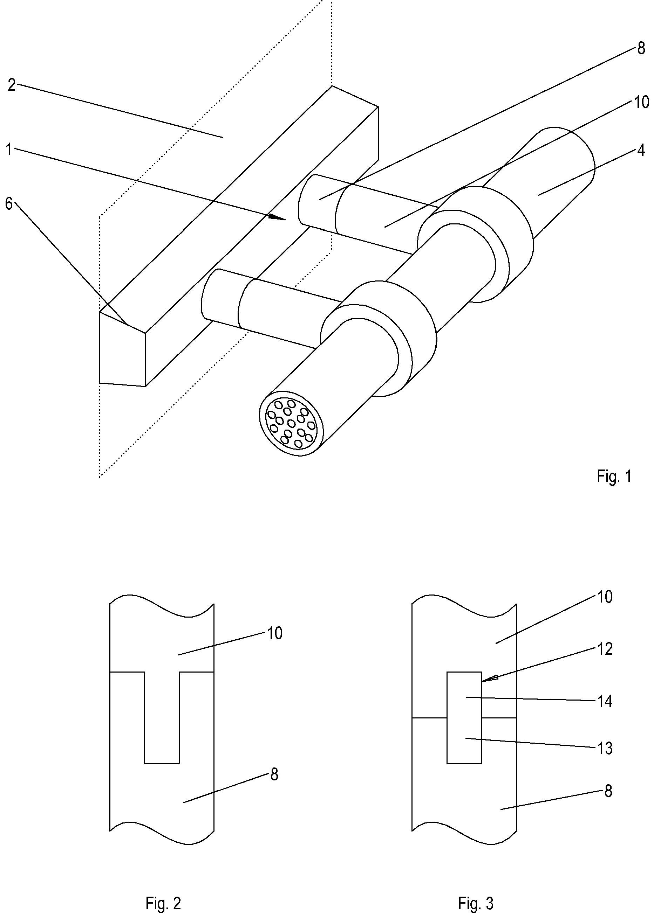

Figure 1 shows an attachment arrangement 1 that is attached to the structure 2 for holding a system 4 in place. In the shown embodiment, the structure 2 is a fuselage section of an aircraft, wherein the arrangement 1 is attached to a stringer 6 extending in longitudinal direction of the fuselage section. The system 4 is in the shown embodiment a line and in particular a cable harness consisting of a plurality of single cables. However, the system 4 can also be a single cable or air conditioning pipe, for instance. In order to attach the system 4 along its entire length to the structure 2, a multiplicity of attachment arrangements 1 are installed on the stringer 6 which are spaced apart from each other in longitudinal direction and which holds the system 4 in a distance to the stringer 6.

Each attachment arrangement 1 comprises at least a first element 8 as a kind of substructure that is bonded to the stringer 6 during its casting process, and at least a second element 10 as a holding section for holding the system 4. The first element 8 and the second element 10 are coupled directly or indirectly to each other.

As illustrated in figure 2, direct coupling, which does not form part of the invention, means to connect the elements 8, 10 by a form-fit, for instance, between the elements 8, 10 without any additional auxiliary elements such as inserts, respectively adapters or sub-structures. As illustrated in Fig 3, coupling the elements 8, 10 indirectly means coupling the elements 8, 10 by an insert 12 that is partially fixed to the first element 8 by its foot section 13 and has a head or mounting section 14 for receiving the second element 10 by form-fit, for instance. For example, the mounting section 14 of the insert 12 can be a screw thread for receiving the second element 10 onto it.

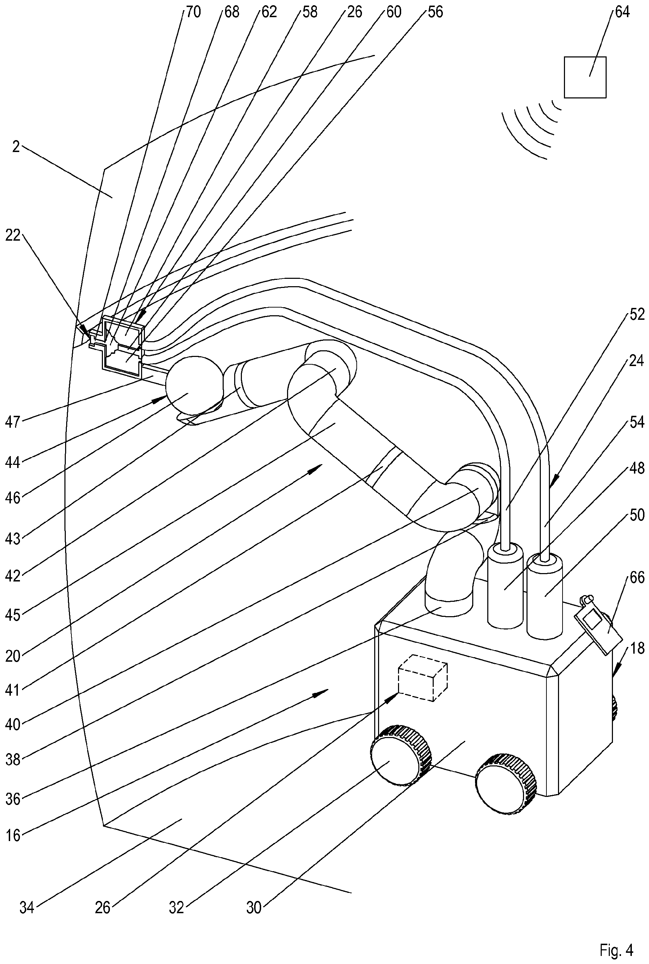

According to the invention, the first element 8 is created by a robotic system 16, shown in figure 4.

According to one embodiment, the robotic system 16 comprises an automatic vehicle 18, a manipulator 20, a mould 22, an injection unit 24, and a control unit 28.

The automatic vehicle 18 has a vehicle body 30 and in the shown embodiment four wheels 32 for moving the robotic system 16 on a ground floor 34. If as shown mentioned before the structure 2 is a fuselage section, the ground floor 34 is a cabin floor, for instance. As the automatic vehicle 18 is not guided in rails on the ground floor 34, it can move without any restrictions regarding its directions on the ground floor 34. Here, the automatic vehicle 18 can move freely in longitudinal and transversal direction of the structure 2. It is mentioned that the automatic vehicle 18 is not limited to four wheels 32. The automatic vehicle can also have less or more than four wheels 32 or wheel-like elements. For the sake of clarity, a steering unit for steering at least two wheels 32 or a motor for driving the wheels 32 is not shown.

The manipulator 20 is mounted to the vehicle body 30 and has in the shown embodiment a plurality of hinges 36, 38, 40, 41, 42, 43 and a mounting head 44. Two adjacent hinges 36, 38, 40, 41, 42, 43 are orientated rectangular to each other and are connected by at least one arm element 45. The mounting head 44 is illustrated as a ball head 46 that is guided in a spercial bearing and which has a coupling element 47 for receiving the mixing chamber 26. Due to the plurality of hinges 36, 38, 40, 41, 42, 43 in addition with the mounting head 44, the mould 22, which is attached to the mixing chamber 26, can be moved to every position on the structure 2.

The injection unit 24 has at least two material tanks 48, 50 which are based on, respectively in the vehicle bode 30. Each material tank 48, 50 is in connection with a mixing chamber 26 of the injection unit 24 by a single conduit 52, 54.

The mixing chamber 26 has at least two single chamber parts 56, 58 which are separated by a wall 60 in the area of an entry zone of the conduits 52, 54. Away from the entry zone, the chamber parts 56, 58 are forming a mixing zone 62 for mixing up the single materials and thus for creating a material composition. In order to reduce the curing time of the material composition, preferably one material is a rapid curing hardener.

The control unit 28 is located in the vehicle body 30. It enables at least a position controlling of the robotic system 16 relative to the structure 2. Due to the control unit 28, the robotic system 16 orientates itself relative to the structure 2 by comparison of live measured position data and stored structural design data. In order to receive the live measured position data, the control unit 28 contains a scanner for purposes of scanning the environment of the robotic system 16. An exemplary scanner comprises a laser tracking system. In order to facilitate the orientation, reference points can be fixed to the structure 2. The structural design data are stored on the control unit 28 on the automatic vehicle 18, wherein as illustrated by the reference number 64, the design data can also be stored beside the robotic system 16 and transferred wireless to the robotic system 16. Additionally, in order to have access to the robotic system 16 directly by an operator, the control unit 28 comprises a panel element 66.

The mould 22 is releasable mounted to the mixing chamber 26. The mould 22 has a hollow cavity 70 and covers an outlet 68 of the mixing chamber 26 such that the at least one material can enter the cavity 70. The design of the cavity 70 can vary and depends on the respective attachment arrangement. Mainly, the cavity design is only restricted by production requirements, for instance requirements for enabling an easy release of the moulded first element 8.

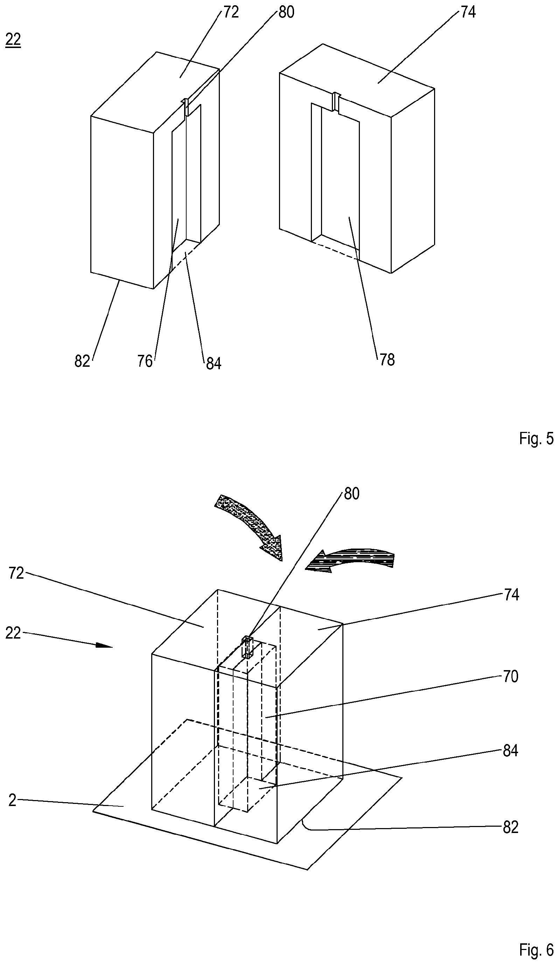

As illustrated in figure 5, the mould 22 can have two parts 72, 74, which are moveable to each other and which has a recess 76, 78 each for defining the cavity 70 for receiving the at least one material for creating the first element 8. For sake of clarity, a channel 80 is illustrated which creates a fluid connection between the outlet 68 of the mixing zone 62 and the cavity 70. The channel or gate, respectively, is partially integrated in each part 72, 74.

In order to enable the injected material to be bonded to the structure 2, the mould 22 has a contact surface 82 formed by the parts 72, 74 in which an opening 84 is provided. In the shown embodiment, the opening 84 is formed in each part 72, 74 and has the same partially cross sections as the recesses 76, 78 forming the cavity 70. The contact surface 82 is adapted to a structure area in a target position of the attachment arrangement 1, such that the contact surface 82 is sealed to the structure 2. In one embodiment, the contact surface 82 is flexibly, thus enabling the contact surface 82 to follow the respective structure area. The cavity 70 is in connection with the mixing zone 62 via its channel 80 and via the outlet 68 of the mixing chamber 26, and opened to the structure 2 by the opening 78.

As shown in figure 6, in operation the cavity 70 is closed by moving the parts 72, 74 to each other. By pressing the mould 22 with its contact surface 82 against the structure 2 the at least one material injected into the cavity 70 can be bonded to the surface 2 by passing through the opening 84.

In the following, a preferred method according to one embodiment of the invention is described.

The mould 22 is mounted to the manipulator 20 of the robotic system 16 by a connecting it to the mixing chamber 26. The material tanks 48, 50 are filled up with the required materials. The robotic system 16 is positioned to the structure 2 in a starting position.

Then, the robotic system 16 is activated and moves automatically by comparison of live measured data and stored structure data to each target position of the attachment arrangements 1 on the structure 2. After one target position is reached, the closed mould 22 is pressed against the structure 2 and thus closed at its contact surface 82 (figures 4 and 6).

After the mould 22 is pressed against the structure 2, the injection unit 24 is activated and the materials are injected first into the mixing chamber 26, where they are mixed to a material composition, and then the material composition is injected into the cavity 70 of the mould 22. The material composition is injected under high pressure into the cavity 70 thus causing an adhesive effect between the material composition and the structure 2. After curing the material composition, the mould 22 is opened and a first element 8 of the attachment arrangement 1 is created and bonded to the structure 2 in its target position (figure 6). Then, a first element 8 of a second attachment arrangement 1 can be fixed to the structure 2 by the robotic system 16.

After the first element 8 is released, an operator attaches manually a second element 10 of the attachment arrangement 1 to the first element 8.

After the required number of attachment arrangements 1 has been installed, the system 4 is attached to the multiplicity of attachment arrangements 1.

In other words, the first element 8 of the arrangement 1 is bonded to the structure 1, wherein the first element 8 is created by injecting at least one material into a mould 22 carried by a robotic system 16 to a target position of the arrangement 1 on the structure 2 which is closed at one side by pressing it against the structure 2, and after the first element 8 is cured a second element 10 of the arrangement 1 is coupled indirectly to the first element 8.

In order to enhance the adhesive effect between the structure 2 and the first element 8, preferably, the structure 2 is surface treated before the mould 22 is pressed against a structure area. Preferably, the surface treatment is done by a treatment unit of the robotic system 16.

In order to position the insert 12 mentioned in figures 1 and 3 for creating an indirectly coupling between the first element 8 and the second element 10, a respective insert 12 can be hold in its target position during the injection of the material composition by a not shown holding device of the robotic system 16.

Disclosed is a method for the attachment of an arrangement for the attachment of a system to a structure at least partially, wherein a first element of the arrangement is bonded to the structure, wherein the first element is created by injecting at least one material into a mould carried by a robotic system to a target position of the arrangement on the structure which is closed at one side by pressing it against the structure, and after the first element is cured, a second element of the arrangement is coupled directly or indirectly to the first element, and a robotic system for executing such a method.

### Reference Symbol List

- 1: arrangement
- 2: structure
- 4: system
- 6: stringer
- 8: first element
- 10: second element
- 12: insert
- 13: foot section
- 14: head section / mounting section
- 16: robotic system
- 18: automatic vehicle
- 20: manipulator
- 22: mould
- 24: injection unit
- 26: mixing chamber
- 28: control unit
- 30: vehicle body
- 32: wheels
- 34: ground floor
- 36: hinge
- 38: hinge
- 40: hinge
- 41: hinge
- 42: hinge
- 43: hinge
- 44: Mounting head
- 45: arm element
- 46: ball head
- 47: coupling element
- 48: material tank
- 50: material tank
- 52: conduit
- 54: conduit
- 56: chamber part
- 58: chamber part
- 60: wall
- 62: mixing zone
- 64: Emitter unit
- 66: Panel element
- 68: outlet
- 70: cavity
- 72: part
- 74: part
- 76: recess
- 78: recess
- 80: channel / gate
- 82: contact surface
- 84: opening

## Claims

1. A Method for the attachment of an arrangement (1) for the attachment of a system (4) to a structure (2) at least partially, wherein a first element (8) of the arrangement (1) is bonded to the structure (1), wherein the first element (1) is created by injecting at least one material into a mould (22) carried by a robotic system (16) to a target position of the arrangement (1) on the structure (2) which is closed at one side by pressing it against the structure (2), and after the first element (8) is cured a second element (10) of the arrangement (1) is coupled indirectly to the first element (8), wherein an insert (12) for coupling the second element (10) to the first element (8) is positioned at least partially in the mould (22) during the material injection, wherein the mould (22) is positioned on the structure with a manipulator (20) of the robotic system (16), wherein the manipulator (20) is carried by a railless automated vehicle (18).

2. The method in accordance with claim 1, wherein the robotic system (16) orientates itself relative to the structure (2) by a comparison of live measured position data and stored structure design data.

3. The method in accordance with claim 1 or 2, wherein the structure (2) is surface treated in the target position before bonding the first element (8) to the structure, in particular by the robotic system (16).

4. A robotic system (16) for the attachment of an arrangement (1) for the attachment of a system (4) to a structure (2) at least partially, comprising
- a mould (22) defining a cavity (70) for creating a first element (8) of the arrangement (1) and having a contact surface (82) for being pressed against the structure (2), wherein the mould (22) comprises an opening (84) in its contact surface (82),
- an injection unit (24) for providing and injecting at least one material into the mould (22), and
- a control unit (28) for controlling at least a position of the robotic system (16) relative to the structure (2), wherein an insert (12) for coupling a second element (10) to the first element (8) is positioned at least partially in the mould (22) during the material injection,
wherein the robotic system (16) comprises a manipulator (20) for positioning the mould (22) on the structure (2) and a railless automated vehicle (18) for carrying the manipulator (20).

5. The robotic system in accordance with claim 4, wherein the mould (22) comprises two parts (72, 74) defining the cavity (70) which are movable relatively to each other.

6. The robotic system in accordance with claim 4 or 5, wherein the control unit (28) comprises a scanner for scanning the environment of the robotic system (16).

7. The robotic system in accordance with claim 4, 5 or 6, wherein the injection unit (24) comprises a mixing chamber (26) for injecting a material composition comprising different materials into the mould (22).

8. The robotic system in accordance with any of the preceding claims 5 to 8, wherein a holding device is provided for positioning an insert (12) at least partially in the mould (22) during material injection.

9. The robotic system in accordance with any of the preceding claims 4 to 8, wherein a treatment unit is provided for surface treatment of the structure (2) in the target position of the arrangement (1).

## Patentansprüche

1. Verfahren zur Befestigung einer Anordnung (1) zur, zumindest teilweisen, Befestigung eines Systems (4) an einer Struktur (2), wobei ein erstes Element (8) der Anordnung (1) an die Struktur (1) angeklebt ist, wobei das erste Element (1) durch Einspritzen zumindest eines Materials in eine Form (22) erzeugt wird, die durch ein Robotersystem (16) zu einer Zielposition der Anordnung (1) an der Struktur (2) getragen wird, die auf einer Seite geschlossen wird, indem sie gegen die Struktur (2) gepresst wird, und wobei, nachdem das erste Element (8) ausgehärtet ist, ein zweites Element (10) der Anordnung (1) indirekt mit dem ersten Element (8) gekoppelt wird, wobei ein Einsatz (12) zum Koppeln des zweiten Elements (10) mit dem ersten Element (8) während der Materialeinspritzung zumindest teilweise in der Form (22) positioniert ist, wobei die Form (22) mit einem Manipulator (20) des Robotersystems (16) an der Struktur positioniert wird, wobei der Manipulator (20) durch ein schienenloses automatisiertes Fahrzeug (18) getragen wird.

2. Verfahren nach Anspruch 1, wobei das Robotersystem (16) sich selbst relativ zur Struktur (2) ausrichtet durch einen Vergleich von unmittelbar gemessenen Positionsdaten und gespeicherten Strukturkonzeptdaten.

3. Verfahren nach Anspruch 1 oder 2, wobei die Struktur (2) in der Zielposition oberflächenbehandelt wird, bevor das erste Element (8) auf die Struktur geklebt wird, insbesondere durch das Robotersystem (16).

4. Robotersystem (16) zur Befestigung einer Anordnung (1) zur, zumindest teilweisen, Befestigung eines Systems (4) an einer Struktur (2), das Folgendes umfasst:
- eine Form (22), die einen Hohlraum (70) zum Erzeugen eines ersten Elements (8) der Anordnung (1) definiert und eine Kontaktfläche (82) aufweist, um gegen die Struktur (2) gepresst zu werden, wobei die Form (22) eine Öffnung (84) in ihrer Kontaktfläche (82) umfasst,
- eine Einspritzeinheit (24) zum Bereitstellen und Einspritzen zumindest eines Materials in die Form (22), und
- eine Steuereinheit (28) zum Steuern zumindest einer Position des Robotersystems (16) relativ zur Struktur (2), wobei ein Einsatz (12) zum Koppeln eines zweiten Elements (10) am ersten Element (8) während der Materialeinspritzung zumindest teilweise in der Form (22) positioniert ist,
wobei das Robotersystem (16) einen Manipulator (20) zum Positionieren der Form (22) an der Struktur (2) und ein schienenloses automatisiertes Fahrzeug (18) zum Tragen des Manipulators (20) umfasst.

5. Robotersystem nach Anspruch 4, wobei die Form (22) zwei den Hohlraum (70) definierende Teile (72, 74) umfasst, die relativ zueinander bewegbar sind.

6. Robotersystem nach Anspruch 4 oder 5, wobei die Steuereinheit (28) einen Scanner zum Abtasten der Umgebung des Robotersystems (16) umfasst.

7. Robotersystem nach Anspruch 4, 5 oder 6, wobei die Einspritzeinheit (24) eine Mischkammer (26) zum Einspritzen einer Materialzusammensetzung, umfassend unterschiedliche Materialien, in die Form (22) umfasst.

8. Robotersystem nach einem der vorhergehenden Ansprüche 5 bis 7, wobei eine Haltevorrichtung zum Positionieren eines Einsatzes (12) während der Materialeinspritzung zumindest teilweise in der Form (22) bereitgestellt wird.

9. Robotersystem nach einem der vorhergehenden Ansprüche 4 bis 8, wobei eine Behandlungseinheit zur Oberflächenbehandlung der Struktur (2) in der Zielposition der Anordnung (1) bereitgestellt wird.

## Revendications

1. Procédé permettant de rattacher un agencement (1) destiné à rattacher au moins partiellement un système (4) à une structure (2), dans lequel un premier élément (8) de l'agencement (1) est collé à la structure (1), dans lequel le premier élément (1) est créé en injectant au moins une matière dans un moule (22) porté par un système robotique (16) jusqu'à une position cible de l'agencement (1) sur la structure (2), qui est fermé d'un côté en le pressant contre la structure (2), et après que le premier élément (8) a été durci, un deuxième élément (10) de l'agencement (1) est couplé indirectement avec le premier élément (8), dans lequel un insert (12) pour coupler le deuxième élément (10) au premier élément (8) est positionné au moins en partie dans le moule (22) pendant l'injection de matière, dans lequel le moule (22) est positionné sur la structure au moyen d'un manipulateur (20) du système robotique (16), le manipulateur (20) étant porté par un véhicule automatisé sans rails (18).

2. Procédé selon la revendication 1, dans lequel le système robotique (16) s'oriente lui-même par rapport à la structure (2) en comparant des données de position mesurées en direct et des données théoriques de structure mémorisées.

3. Procédé selon la revendication 1 ou 2, dans lequel la structure (2) est traitée en surface à la position cible avant le collage du premier élément (8) sur la structure, en particulier par le système robotique (16) .

4. Système robotique (16) permettant de rattacher un agencement (1) destiné à rattacher au moins partiellement un système (4) à une structure (2), comprenant
- un moule (22) définissant une cavité (70) pour créer un premier élément (8) de l'agencement (1) et ayant une surface de contact (82) destinée à être pressée contre la structure (2), le moule (22) comprenant une ouverture (84) dans sa surface de contact (82),
- une unité d'injection (24) pour fournir et injecter au moins une matière dans le moule (22), et
- une unité de commande (28) pour commander au moins une position du système robotique (16) par rapport à la structure (2), un insert (12) pour coupler un deuxième élément (10) au premier élément (8) étant positionné au moins partiellement dans le moule (22) pendant l'injection de matière,
le système robotique (16) comprenant un manipulateur (20) pour positionner le moule (22) sur la structure (2) et un véhicule automatisé sans rails (18) pour porter le manipulateur (20).

5. Système robotique selon la revendication 4, dans lequel le moule (22) comprend deux parties (72, 74) définissant la cavité (70), qui sont mobiles l'une par rapport à l'autre.

6. Système robotique selon la revendication 4 ou 5, dans lequel l'unité de commande (28) comprend un scanner pour scanner l'environnement du système robotique (16).

7. Système robotique selon la revendication 4, 5 ou 6, dans lequel l'unité d'injection (24) comprend une chambre de mélange (26) pour injecter dans le moule (22) une composition de matières comprenant différentes matières.

8. Système robotique selon l'une quelconque des revendications précédentes 5 à 7, dans lequel le dispositif de maintien est prévu pour positionner un insert (12) au moins partiellement dans le moule (22) pendant l'injection de matière.

9. Système robotique selon l'une quelconque des revendications précédentes 4 à 8, dans lequel une unité de traitement est prévue pour un traitement de surface de la structure (2) dans la position cible de l'agencement (1).
